Europäisches Patentamt

(19) European Patent Office    (11) Publication number: **0 042 825**

Office européen des brevets    **B1**

(12) **EUROPEAN PATENT SPECIFICATION**

(45) Date of publication of patent specification: **10.04.85**    (51) Int. Cl.⁴: **A 01 F 12/44**

(21) Application number: **81830091.5**

(22) Date of filing: **02.06.81**

(54) **Combine harvester provided with an axial-flow separating unit.**

| | |
|---|---|
| (30) Priority: **19.06.80 IT 5332080 u** | (73) Proprietor: **PIETRO LAVERDA S.p.A.** **I-36042 Breganze (Vicenza) (IT)** |
| (43) Date of publication of application: **30.12.81 Bulletin 81/52** | (72) Inventor: **Raineri, Giuseppe** **Via Bellini 20/22** **I-36061 Bassano del Grappa (Vicenza) (IT)** |
| (45) Publication of the grant of the patent: **10.04.85 Bulletin 85/15** | (74) Representative: **Jacobacci, Filippo et al** **c/o JACOBACCI-CASETTA & PERANI S.n.c. Via Alfieri, 17** **I-10121 Torino (IT)** |
| (84) Designated Contracting States: **BE DE FR GB IT NL SE** | |
| (56) References cited: **DE-A-1 482 836** **DE-A-1 582 650** **DE-B-1 297 390** **DE-B-1 901 157** **FR-A-1 223 005** **FR-A-2 238 418** **GB-A-1 049 834** **GB-A-1 543 036** **GB-A-2 053 644** **GB-A-2 057 240** **US-A-1 604 912** **US-A-2 927 694** | (56) References cited: **US-A-3 126 893** **US-A-3 613 691** **US-A-4 178 942** |

Courier Press, Leamington Spa, England.

## Description

The present invention relates to a combine harvester.

More particularly, the invention relates to a combine harvester of the known type including:

a cutting table,

a threshing unit, for first separation of the grain from the harvested crop, situated to the rear of the cutting table and including a threshing cylinder which is disposed transversely relative to the longitudinal axis of the harvester, and a counter-beater, substantially in the form of a concave grille, surrounding the lower part of the thresher so as to define a passage through which the harvested crop can pass in a direction parallel to the longitudinal axis of the harvester,

crop cleaning means situated downstream of the threshing unit, and including at least one pair of superimposed cleaning screens and at least one fan, associated with the said cleaning screens, which produces an upcurrent of air through said screens,

an axial flow separating unit for complementary separation of the grain, interposed between the threshing unit and the cleaning means, the separating unit including a separating cylinder and a separator casing which is substantially in the form of a tubular body surrounding the separating cylinder in such a manner as to define a passage intended to be traversed axially by the crop leaving the threshing unit, said axial-flow separating unit being arranged transversally relative to the longitudinal direction of the harvester,

means for feeding the grain leaving the threshing unit and the axial-flow separating unit to the said cleaning means with a collecting floor disposed beneath the axial-flow separating unit for collecting grain separated by the latter.

A combine harvester of the above described type is disclosed, for example, in GB—A—1,543,036.

The main object of the present invention is that of improving the combine harvesters of the above described known type by providing means of simple and economic construction which allows the above mentioned cleaning means of the harvester to operate with better efficiency.

According to the present invention, this object is achieved by providing a combine harvester of the type specified above, characterised in that the means for feeding the grain leaving the threshing unit and the axial-flow separating unit to the said cleaning means comprises:

conveyor means for conveying the grain separated by the said counter-beater to said collecting floor,

a rotating bladed member disposed over the collecting floor and adapted to throw the material collected on the said floor rearwardly and upwardly,

a deflector constituted by an inverted transverse channel, said deflector having a substantially parabolic cross section and being arranged to deflect the material thrown up by the said rotating bladed member above the cleaning screens,

the orientation of said parabolic deflector being adjustable to vary the speed and the direction of fall of the grain onto the cleaning screens.

The deflector element serves as an element for accelerating the fall of the grain onto the cleaning screens thus enabling an improvement in the efficiency of the separating action effected by the upcurrent of air produced by the fan associated with the said screens.

Furthermore, adjustment of the parabolic deflector allows the speed and the direction of fall of the grain onto the cleaning screens to be varied.

Finally, the above described parabolic deflector is of very simple and low cost construction.

Further characteristics and advantages of the present invention will become apparent from the description which follows, made with reference to the appended drawings provided purely by way of non-limiting example, in which:

Figures 1, 2 and 3 are a plan view and two cross-sectional views along lines II—II and III—III of Figure 1 which illustrate schematically a combine harvester according to the present invention,

Figure 4 is a perspective view on an enlarged scale of a detail of Figure 2.

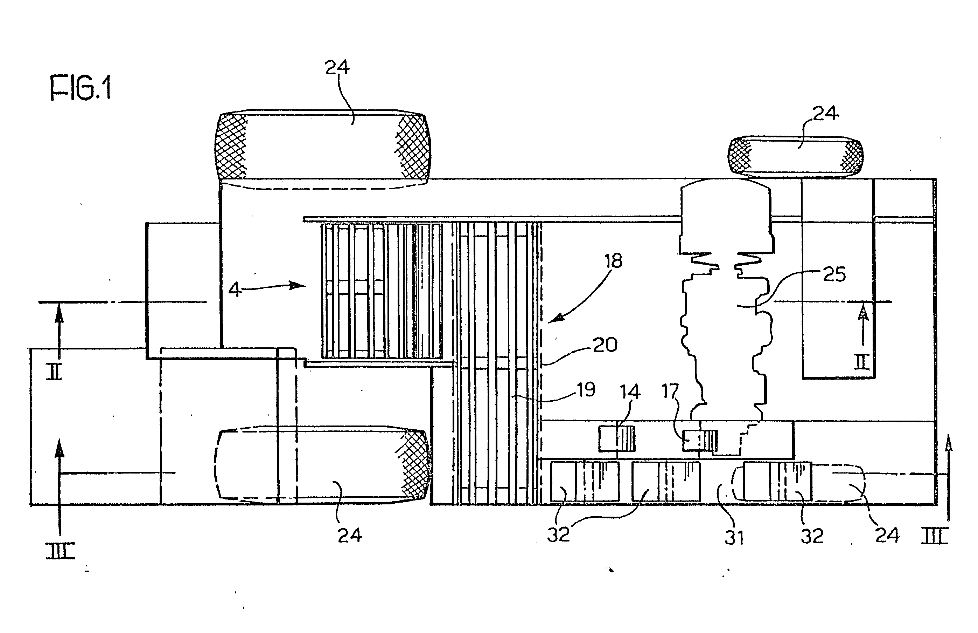

The combine harvester illustrated in Figures 1—4 comprises a cutting table 1 (shown only partially), including a feed auger (not shown) and a front elevator 3 of conventional type which receives the harvested crop by the feed auger and feeds it to a threshing unit indicated in its entirety by the reference numeral 4.

The threshing unit 4 is of conventional type and includes a threshing cylinder 5 and a counter-beater 6 basically constituted by a concave grille which surrounds the lower part of the threshing cylinder 5.

As in conventional combine harvesters, the threshing cylinder 5 is disposed transversely of the direction of advance of the harvester, and the counterbeater 6 defines therewith a passage through which the crop will pass parallel to the said direction of advance.

A separating unit 18, of the axial-flow type, is disposed downstream of the threshing unit 4 and includes a separating cylinder 19, which is disposed with its axis lying in a horizontal plane, transverse the direction of travel of the harvester.

The separating cylinder 19 is surrounded by a tubular separator casing 20 the lower part of which, for an angular extent of about 200°, is formed by a grille. The upper part of the casing 20 is, however, closed. The casing 20 is further provided on its inside with a helical rib (not shown).

A post-thresher 30 is tapered immediately downstream of the threshing unit 4 and upstream of the separating unit 18.

As is shown in Figure 1, the threshing unit 4 is disposed to one side of the harvester and feeds one end of the separating unit 18.

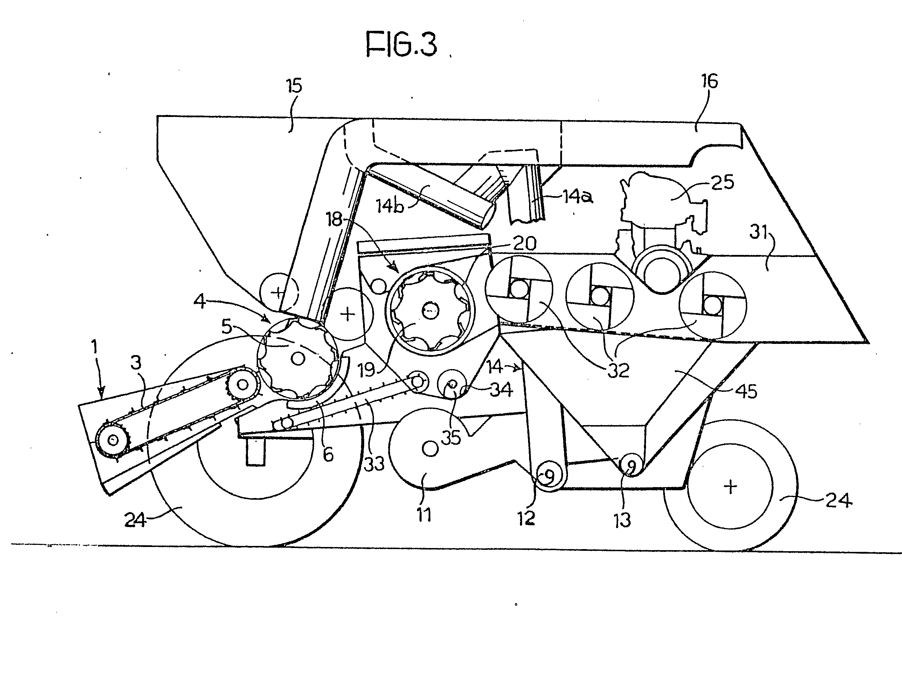

The discharge end of the separating unit 18 communicates with a discharge duct 31 (see Figures 1, 3) in which are disposed three evacuator paddle drums 32.

Below the threshing unit 4 is disposed a chain conveyor 33 which feeds the grain separated by the threshing unit 4 onto a collecting floor 34 disposed below the separator casing 20.

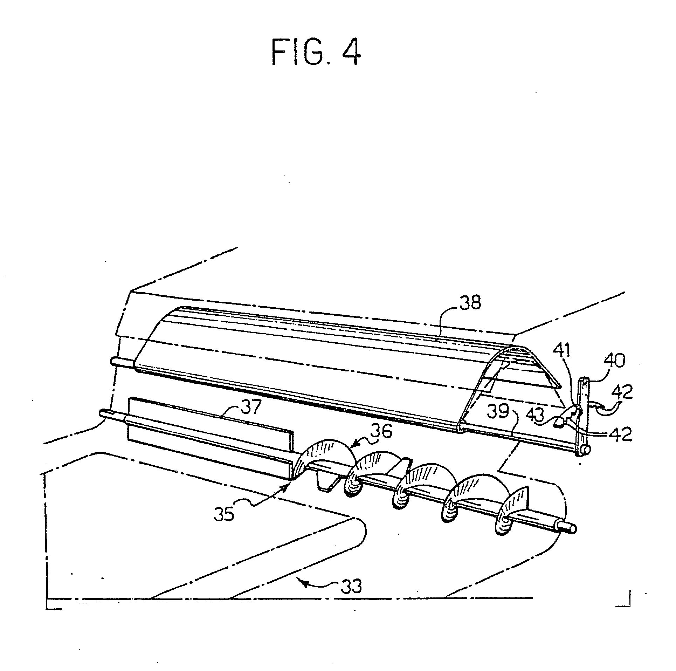

In correspondence with the collecting floor 34 is located a rotatable device 35 having an auger portion 36 and a bladed portion 37 (see Figure 4).

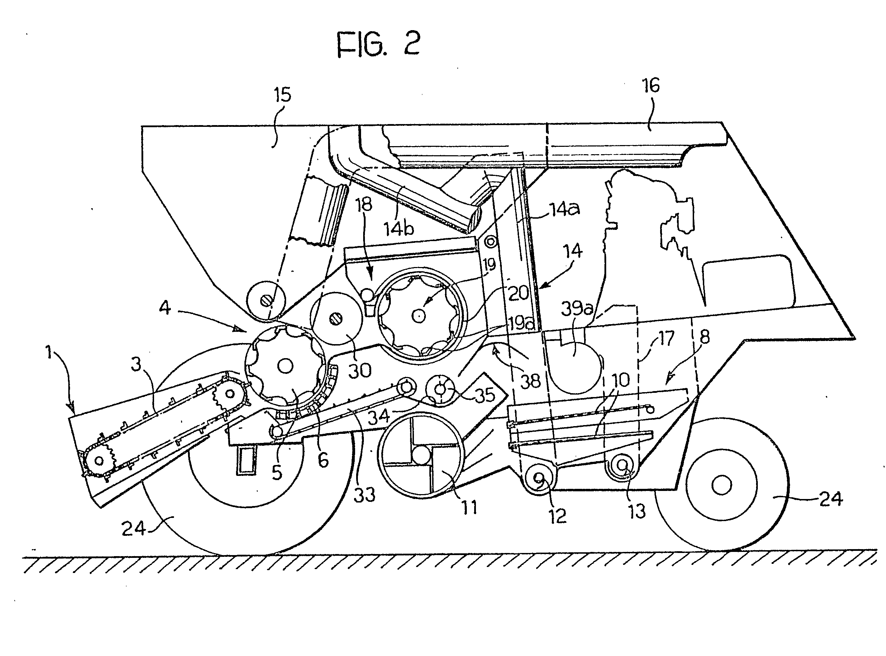

Behind and above the device 35 is disposed a deflector 38 (see Figures 2, 4) having a transverse section in the form of an upside-down parabola supported by a transverse bar 39 which is rotatably mounted on the chassis of the harvester and which carries a lever 40 at one end. The lever 40 has a notch 41 which can be inserted in any one of a series of detents 42 formed in a saw-shaped side of a member 43 fixed to the chassis of the machine. In this manner it becomes possible to change the orientation of the deflector 38.

The cleaning unit 8 includes a pair of cleaning screens 10, of a type known *per se*, disposed immediately below and rearwardly of the parabolic deflector 38, and an associated pair of fans 11 (only one of which is illustrated) which produce an upcurrent of air through the screens 10.

Below the cleaning screens 10 are disposed an auger 12 for conveying the cleaned grain and an auger 13 for conveying the tailings.

The auger 12 is arranged to convey the cleaned grain to the loading end of an elevator 14 of known type (having a bladed portion 14a and an auger portion 14b), the discharge end of which is disposed over the central zone of a tank 15 for collecting the grain. Associated with this tank is an orientable auger device 16 for discharging the grain from the tank.

The tailings conveyor auger 13 is arranged to feed the tailings to a tailings elevator 17, which is provided, in a manner known *per se*, with a bladed rotor 39a.

All the mechanisms of the combine harvester are supported by a chassis mounted on wheels 24.

The operation of the harvester illustrated in Figures 1 to 4 is as follows:

The harvested crop is fed by the elevator 3 to the threshing unit 4 of conventional type, the cylinder 5 of which rotates at a speed considered optimum for the purposes of the threshing operation.

The grain passes through the counter-beater 6 and is collected by the conveyor 33 which carries it to the collecting floor 34, while the straw and material of a certain length is thrust towards the loading end of the separating unit 18.

The material fed to the separating unit 18 follows a helical path around the separating cylinder 19, as it is displaced towards the discharge end.

During this phase, the grain is separated through the separator casing and falls onto the collecting floor 34. The straw however is fed to the duct 31 from which it is evacuated by the operation of the paddle drums 32.

The grain collected on the floor 34 is displaced by the auger portion 36 of the rotatable device 35 towards the blades 37 which fling it vigorously upwardly in the direction of the deflector 38. This deflector deviates the material downwardly causing it to rain onto the separator screens 10. During its fall the grain is blasted by the upcurrent of air produced by the fans 11 whereby the lighter material is cleared out. The grain which collects in the auger 12 is transported to the tank 15 while the grain which collects in the auger 13 is transported to the bladed rotor 39a which ejects it upwardly causing it to rain onto the screens 10.

As illustrated in Figure 3, the bottom of the duct 31 is formed as a grille so as to allow separated material to fall on the auger 13, by causing it to pass into a hopper 45 disposed below this duct.

As described above, the position of the parabolic deflector 38 may be regulated so as to allow the speed and the direction of fall of the grain onto the cleaning screens 10 to be varied.

The deflector element 38 serves as an element for accelerating the fall of the grain thus enabling an improvement in the efficiency of the separating action effected by the upcurrent of air produced by the fans 11.

**Claims**

1. A combine harvester, including
a cutting table (1),
a threshing unit (4), for first separation of the grain from the harvested crop, situated to the rear of the cutting table (1) and including a threshing cylinder (5) which is disposed transversely relative to the longitudinal axis of the harvester, and a counter-beater (6), substantially in the form of a concave grille surrounding the lower part of the thresher (5) so as to define a passage through which the harvested crop can pass in a direction parallel to the longitudinal axis of the harvester,
crop cleaning means (8) situated downstream of the threshing unit, and including at least one pair of superimposed cleaning screens (10) and at least one fan (11) associated with the said cleaning screens (10), which produces an upcurrent of air through said screens,
an axial-flow separating unit (18) for complementary separation of the grain, interposed between the threshing unit (4) and the cleaning means (8), the separating unit (18) including a separating cylinder (19) and a separator casing (20), substantially in the form of a tubular body, surrounding the separator cylinder (19) in such a manner as to define a passage intended to be axially traversed by the crop leaving the threshing unit (4), said axial-flow separating unit being arranged transversally relative to the longitudinal direction of the harvester,
means (7) for feeding the grain leaving the threshing unit (4) and the axial-flow separating unit (20) to the said cleaning means with a collecting floor (34) disposed beneath the axial-flow separating unit (18) for collecting grain separated by the latter,

characterised in that the means (7) for feeding the grain leaving the threshing unit (4) and the axial-flow separating unit (20) to the said cleaning means comprises:

conveyor means (33) for conveying the grain separated by the said counter-beater (6) to the collecting floor (34),

a rotating bladed member (35) disposed over the collecting floor (34) and adapted to throw the material collected on the said floor (34) rearwardly and upwardly,

a deflector (38) constituted by an inverted transverse channel, said deflector (38) having a substantially parabolic cross section and being arranged to deflect the material thrown up by the said rotating bladed member above the cleaning screens,

the orientation of said parabolic deflector (38) being adjustable to vary the speed and the direction of fall of the grain onto the cleaning screens.

2. A combine harvester according to Claim 1, characterised in that the said rotating bladed member (35) has a bladed portion (37) to fling the grain in the direction of the parabolic deflector (38), and an auger portion (36) arranged to push the grain towards the bladed portion (37).

3. A combine harvester according to Claim 1, characterised in that the threshing unit (4) is disposed to one lateral side of the harvester, and the separating unit (18) has a loading end adjacent the threshing unit (4) and a discharge end situated at the other lateral side of the harvester and communicating with a longitudinal discharge duct (31) which is open rearwardly and is provided with a series of evacuator paddle drums (32) for discharging the waste product leaving the axial-flow separating unit (18).

4. A combine harvester according to Claim 3, characterised in that the bottom of the said discharge duct (31) is constituted by a grille and in that below this grille there is disposed a hopper in the bottom of which is a conveyor auger (13) for tailings intended to be recycled through the harvester.

## Revendications

1. Une moissonneuse-batteuse comprenant:
une table de coupe (1);
un dispositif de battage (4) pour effectuer une première séparation du grain de la récolte moissonnée, situé à l'arrière de la table de coupe (1) et comprenant un cylindre batteur (5) qui est disposé transversalement par rapport à l'axe longitudinal de la moissonneuse, et un contre-batteur (6), ayant sensiblement la forme d'une grille concave, qui entoure la partie inférieure du batteur (5) de façon à délimiter un passage par lequel la récolte moissonnée peut passer dans une direction parallèle à l'axe longitudinal de la moissonneuse;
des moyens (8) de nettoyage de la récolte situés en aval du dispositif de battage et comportant au moins une paire de tamis de nettoyage superposés (10) et au moins un ventilateur (11), associé auxdits tamis de nettoyage, qui produit un courant d'air ascendant à travers lesdits tamis;
un dispositif de séparation à écoulement axial (18) pour effectuer une séparation complémentaire du grain, interposé entre le dispositif batteur (4) et les moyens de nettoyage (8), le dispositif de séparation (18) comprenant un cylindre de séparation (19), et un carter séparateur (20), sensiblement sous la forme d'un corps tubulaire (19), qui entoure le cylindre de séparation (19) d'une manière appropriée pour délimiter un passage destiné à être parcouru axialement par la récolte qui quitte le dispositif de battage (4), ledit dispositif de séparation à écoulement axial étant disposé transversalement par rapport à la direction longitudinale de la moissonneuse;
des moyens (7) pour amener le grain qui quitte le dispositif de battage (4) et le dispositif de séparation à écoulement axial (18) jusqu'auxdits moyens de nettoyage, munis d'un plancher collecteur (34) disposé au-dessous du dispositif de séparation à écoulement axial (18) pour recueillir le grain séparé par de dernier,
caractérisé en ce que les moyens (7) pour amener le grain qui quitte le dispositif de battage (4) et le dispositif de séparation à écoulement axial auxdits moyens de nettoyage comprennent:
des moyens transporteurs (33) pour transporter le grain séparé par ledit contre-batteur (6) jusqu'au plancher collecteur (34),
un organe rotatif à palettes (35) disposé au-dessus du plancher collecteur (34) et agencé de manière à projeter la manière recueillie sur ce plancher (34) vers l'arrière et vers le haut,
un deflecteur (38) constitué par une auge transversale retournée, ce déflecteur (38) ayant une section transversale sensiblement parabolique et étant agencé de manière à dévier la matière projetée vers le haut par ledit organe rotatif à palettes au-dessus des tamis de nettoyage,
l'orientation dudit déflecteur parabolique (38) étant réglable pour permettre de modifier la vitesse et la direction de chute du grain sur les tamis de nettoyage.

2. Une moissonneuse-batteuse selon la revendication 1, caractérisée en ce que l'organe rotatif à palettes (35) comporte une partie (37) munie de palettes pour projeter le grain en direction du déflecteur parabolique (38) et une partie à vis (36) agencée pour pousser le grain en direction de la partie à palettes (37).

3. Une moissonneuse-batteuse selon la revendication 1, caractérisée en ce que le dispositif de battage (4) est disposé sur un côté latéral de la moissonneuse et le dispositif de séparation (18) comporte une extrémité de chargement adjacente au dispositif de battage (4) et une extrémité de décharge située de l'autre côté latéral de la moissonneuse et communiquant avec un conduit de décharge longitudinal (31) qui est ouvert à l'arrière et est muni d'une série de tambours évacuateurs à palettes (32) pour décharger les déchets qui quittent le dispositif séparateur à écoulement axial 18.

4. Une moissonneuse-batteuse selon la revendication 3, caractérisée en ce que le fond dudit conduit de décharge (31) est constitué par une grille et en ce qu'une trémie est disposée au-dessous de cette grille, trémie au fond de laquelle est disposée une vis transporteuse pour les otons qui doivent être recyclés dans la moissonneuse.

**Patentansprüche**

1. Mähdrescher mit Trenneinrichtung der Axialflußbauart, mit einem Schneidtisch (1), einer Drescheinheit (4) zur ersten Trennung des Korns von dem Erntegut, welcher hinter dem Schneidtisch (1) gelegen ist und einem Dreschzylinder (5), welcher quer zur Längsachse des Mähdreschers angeordnet ist, sowie einen Schläger (counter-beater) (6) im wesentlichen in Gestalt eines konkaven Rostes umfaßt, der den unteren Teil des Dreschers (5) umgibt, um dadurch eine Passage zu definieren, durch welche hindurch das Erntegut in einer Richtung parallel zur Längsachse des Mähdreschers durchlaufen kann, ferner einer Erntegut-Reinigungseinrichtung (8), die stromab der Drescheinheit gelegen ist und wenigstens ein Paar überlagerter Reinigungssiebe (10) und wenigstens ein den Reinigungssieben (10) zugeordnetes Gebläse (11) umfaßt, welches einen Aufwärtsstrom von Luft durch die Siebe erzeugt, einer Axialfluß-Trenneinrichtung (18) zur ergänzenden Trennung des Korns, welche zwischen die Drescheinheit (4) und die Reinigungseinrichtung (8) zwischengeschaltet ist und einen Trennzylinder (19) sowie ein Trenngehäuse (20), im wesentlichen in Gestalt eines rohrförmigen Körpers, umfaßt, welches den Trennzylinder (19) derart umgibt, daß eine Passage definiert wird, die für das axiale Durchqueren durch das die Drescheinheit (4) verlassende Erntegut vorgesehen ist, wobei die Axialfluß-Trenneinrichtung quer zur Längsrichtung des Mähdreschers angeordnet ist, und einer Einrichtung (7) zum Zuführen des Getreides, das die Drescheinheit und die Axialfluß-Trenneinheit (20) verläßt, zu der Reinigungseinrichtung, wobei ein Sammelboden (34) unterhalb der Axialfluß-Trenneinrichtung (18) angeordnet ist, um das von ihr getrennte Getreide zu sammeln,
dadurch gekennzeichnet, daß die Einrichtung (7) zum Zuführen des Getreides, das die Drescheinheit und die Axialfluß-Trenneinrichtung (20) verläßt, zu der Reinigungseinrichtung umfaßt:
Eine Fördereinrichtung (33) zum Fördern des durch den Schläger getrennten Getreides zu dem Sammelboden (34), ein rotierendes Schleuderglied (35), das über dem Sammelboden (34) angeordnet und dafür vorgesehen ist, das auf dem Sammelboden (34) gesammelte Material nach hinten und oben zu schleudern,
eine Ablenkplatte (38), die durch einen umgekehrten Querkanal gebildet wird und einen im wesentlichen parabolischen Querschnitt aufweist und dafür vorgesehen ist, das durch das Schleuderglied (35) hochgeschleuderte Material über die Reinigungssiebe zu lenken, wobei die Orientierung der parabolischen Ablenkplatte (38) einstellbar ist, um die Geschwindigkeit und die Fallrichtung des Getreides auf die Reinigungssiebe zu verändern.

2. Mähdrescher nach Anspruch 1, dadurch gekennzeichnet, daß das rotierende Schleuderglied (35) einen Blattabschnitt (37) aufweist, um das Getreide in Richtung der parabolischen Ablenkplatte (38) zu schleudern, sowie einen Schneckenbereich (36), der dafür vorgesehen ist, das Getreide zu dem Blattabschnitt (37) hinzuschieben.

3. Mähdrescher nach Anspruch 1, dadurch gekennzeichnet, daß die Drescheinheit (4) zu einer seitlichen Seite des Mähdreschers angeordnet ist und die Trenneinrichtung (18) ein Beschickungsende benachbart der Drescheinheit (4) aufweist sowie ein Abgabeende, welches an der anderen seitlichen Seite des Mähdreschers gelegen ist und mit einem in Längsrichtung verlaufenden Abgabekanal (31) in Verbindung steht, welcher hinten offen ist und mit einer Reihe von Evakuator-Schaufeltrommeln (32) zum Abgeben des Abfalls versehen ist, der die Axialfluß-Trenneinrichtung (18) verläßt.

4. Mähdrescher nach Anspruch 3, dadurch gekennzeichnet, daß der Boden des Abgabekanals (31) durch einen Rost gebildet wird, und daß unterhalb diesem Rost ein Trichter angeordnet ist, in dessen Boden sich eine Förderschnecke (13) für Rückstände befindet, deren nochmaliger Durchlauf durch den Mähdrescher vorgesehen ist.

FIG.1

24

24

4

18

25

II

20

19

14

17

II

III

32

32

31

32

24

24

24

III

0 042 825

FIG. 2

FIG.3

# FIG. 4